# EUROPÄISCHE PATENTSCHRIFT

(11) **EP 3 229 525 B1**
(45) Veröffentlichungstag und Bekanntmachung des Hinweises auf die Patenterteilung: **24.07.2019**
(21) Anmeldenummer: 16164070.1
(22) Anmeldetag: 06.04.2016
(51) Int. Cl.: H04W 28/16, G06F 9/50, H04W 72/08

(54) **VERFAHREN ZUR STEUERUNG VON FUNKZUGANGSRESSOURCEN IN EINEM KOMMUNIKATIONSNETZWERK**
METHOD FOR CONTROLLING RADIO ACCESS RESOURCES IN A COMMUNICATION NETWORK
PROCÉDÉ DE COMMANDE DE RESSOURCES D'ACCES RADIO DANS UN RÉSEAU DE COMMUNICATION

(43) Veröffentlichungstag der Anmeldung: 11.10.2017
(73) Patentinhaber: Deutsche Telekom AG, 53113 Bonn (DE)
(72) Erfinder: ARNOLD, Paul, 60389 Frankfurt am Main (DE); BELSCHNER, Jakob, 60322 Frankfurt (DE); KADEL, Gerhard, 64293 Darmstadt (DE)
(74) Vertreter: Patentship Patentanwaltsgesellschaft mbH

(56) Entgegenhaltungen:
- EP-A1- 2 677 830
- US-A1- 2011 125 905

## Beschreibung

Die vorliegende Erfindung betrifft die Steuerung von Funkzugangsressourcen in einem Kommunikationsnetzwerk mit voneinander getrennten Subnetzwerken, beispielsweise Slices eines 5G-Kommunikationsnetzwerks.

Die Offenlegungsschrift US 2011/125905 A1 zeigt einen Slice-Manager zum Verwalten von Slices.

Die Offenlegungsschrift EP 2 677 830 A1 zeigt ein Kommunikationsnetzwerk.

In modernen Kommunikationsnetzwerken ist die Dienstgüte (Quality of Service) ein wichtiger Faktor zur Beurteilung der Leistungsfähigkeit einer Kommunikationstechnologie. In LTE-Kommunikationssystemen ist die Dienstgüte im Rahmen des 3GPP-Standards beschrieben. Gemäß 3GPP14-23203 ist die Dienstgüte benutzerspezifisch in Abhängigkeit von Dienstgüteparametern wie Durchsatz, Latenz, Bitfehlerrate definiert. Diese Dienstgüteparameter werden beispielswiese in einer Basisstation wie eNodeB in einem LTE-Netzwerk benutzt, um beispielsweise das Scheduling der Daten eines Benutzers zu bestimmen, bei dem die geforderte Dienstgüte sichergestellt wird.

Die nachfolgenden Generationen der mobilen Technologien, beispielsweise die fünfte Generation der mobilen Technologie (5G), verändern jedoch die klassische Netzwerkarchitektur zugunsten von heterogenen Subnetzwerken, sog. Slices, welche logisch voneinander separiert sind. In 5G können insbesondere unterschiedliche Funkzugangstechnologien für die Kommunikation über die Slices verwendet werden.

Es ist die Aufgabe der vorliegenden Erfindung, ein effizientes Dienstgüte-Konzept in einem Kommunikationsnetzwerk mit heterogenen Subnetzwerken, welche über Funkzugangstechnologien erreichbar sind, zu schaffen.

Diese Aufgabe wird durch die Merkmale der unabhängigen Ansprüche gelöst. Vorteilhafte Weiterbildungsformen der Erfindung sind Gegenstand der Beschreibung, der abhängigen Ansprüche, sowie der Figuren.

Die vorliegende Erfindung basiert auf der Erkenntnis, dass heterogene Subnetzwerke eines Kommunikationsnetzwerks, beispielsweise Slices eines 5G-Kommunikationsnetzwerks, Dienstgüteklassen zugeordnet werden können, welche für das jeweilige Subnetzwerk an sich gelten. Diese Dienstgüteklassen sind Subnetzwerken des Kommunikationsnetzwerks zugeordnet. Die Subnetzwerke sind beispielsweise für unterschiedliche Dienste vorgesehen und führen daher dienstspezifische Datenströme mit Dienstgüteklassen, welche gemäß Dienstgütevereinbarungen vorgesehen sind. Daher können unterschiedlichen Subnetzwerken desselben Kommunikationsnetzwerks unterschiedliche Dienstgüteklassen zugeordnet werden. Darüber hinaus können innerhalb eines Subnetzwerks unterschiedliche Dienstgüteklassen für unterschiedliche Datenströme vorgesehen oder vereinbart werden. Die Dienstgüteklassen können beispielsweise die Mindestanforderungen an Dienstgüte definieren, welche einzuhalten sind, beispielsweise zu 95% der Übertragungszeit. Daher können über die Subnetzwerke auch Datenströme mit höheren Dienstgüteklassen als die zumindest vereinbarte Dienstgüteklasse für das jeweilige Subnetzwerk geführt werden. Im Allgemeinen kann das jeweilige Subnetzwerk mehrere Datenströme mit einer oder unterschiedlichen Dienstklassen führen, wobei die für das jeweilige Subnetzwerk vereinbarte Dienstgüteklasse die niedrigste Dienstgüteklasse ist. Mit zunehmender Dienstgüteklasse nimmt auch die Dienstgüte zu. Die Dienstgüteklassen können sich beispielsweise in Datenrate, Bandbreite, Latenzzeit oder Bit- bzw. Blockfehlerrate unterscheiden.

Zur Einhaltung der Dienstgüteklassen in den Subnetzwerken wird beispielsweise die Vergabe der Funkzugangsressourcen, wie beispielsweise Zeit und/oder Frequenzressourcen in beispielsweise einem OFMDA-System, der Funkzugangstechnologien, sog. RAT (Radio Access Technology), gesteuert. Hierbei können einem Subnetzwerk, beispielsweise Slice, durch eine Funkzugangsentität wie Basisstation zusätzliche Funkzugangsressourcen bereitgestellt werden, um die dem Subnetzwerk zugewiesene Dienstgüteklasse zu gewährleisten.

Unterscheiden sich die Funkzugangstechnologien voneinander, so kann für den jeweiligen Datenverkehr ferner die jeweils passende Funkzugangstechnologie eingesetzt bzw. ausgewählt werden. Darüber hinaus kann eine Übergabe einer Kommunikationsverbindung von einer Funkzugangsentität zu einer weiteren Funkzugangsentität erfolgen, um die verfügbaren Kommunikationsressourcen effizienter auszunutzen.

Die Funkzugangsentitäten können daher im Allgemeinen unterschiedliche Funkzugangstechnologien implementieren. Ferner kann eine Funkzugangsentität für den Funkzugang zu genau einem Subnetzwerk oder zu einer Mehrzahl von Subnetzwerken vorgesehen sein.

Gemäß einem ersten Aspekt betrifft die Erfindung ein Verfahren zur Steuerung von Funkzugangsressourcen in einem Kommunikationsnetzwerk, wobei das Kommunikationsnetzwerk eine Mehrzahl von Subnetzwerken mit einem ersten Subnetzwerk und mit einem Subnetzwerk aufweist, wobei jedem Subnetzwerk zumindest eine vorgegebene Dienstgüteklasse gemäß zumindest einer Dienstgütevereinbarung zugeordnet ist, wobei die Dienstgüteklassen der Subnetzwerke durch einen zentralen Dienstgütemanager verwaltet werden, wobei das Kommunikationsnetzwerk ferner ein Funkzugangsnetzwerk mit einer Mehrzahl von Funkzugangsentitäten für Funkzugang zu den Subnetzwerken aufweist, wobei jede Funkzugangsentität einen steuerbaren Ressourcenmanager zur Einstellung von Funkzugangsressourcen der Funkzugangsentität aufweist, wobei die Ressourcenmanager durch den zentralen Dienstgütemanager steuerbar sind, mit: Übermitteln eines Steuerparameters durch den zentralen Dienstgütemanager an einen Ressourcenmanager einer ersten Funkzugangsentität, wobei der Steuerparameter zumindest eine Funkzugangsressource der ersten Funkzugangsentität für eine Kommunikationsverbindung des ersten Subnetzwerks über die erste Funkzugangsentität mit einer ersten Dienstgüteklasse, welche dem ersten Subnetzwerk zugeordnet ist, oder Übergabe der Kommunikationsverbindung an eine zweite Funkzugangsentität definiert bzw. anzeigt; und Einstellen der Funkzugangsressource der ersten Funkzugangsentität durch den Ressourcenmanager der ersten Funkzugangsentität oder Übergeben der Kommunikationsverbindung an eine zweite Funkzugangsentität in Abhängigkeit von dem übermittelten Steuerparameter.

Auf diese Weise werden die Ressourcenmanager, beispielsweise Scheduler, und somit Funkzugangsressourcen der Funkzugangsentitäten, beispielsweise Basisstationen oder Routern, zentral durch den Dienstgütemanager gesteuert. Ist beispielsweise eine effizientere Route über eine andere Funkzugangsentität möglich, so kann die Kommunikationsverbindung auch übergeben werden.

Die Funkzugangsressourcen der Funkzugangsentitäten, welche dezentral verteilt sein können, werden demnach zentral durch den zentralen Dienstgütemanager gesteuert.

Dadurch können die Funkzugangsentitäten vereinfacht werden. Außerdem können auf diese Weise insgesamt vorhandene Funkzugangsressourcen besser ausgenutzt werden.

Jede Funkzugangsentität kann den Funkzugang zu einem oder zu mehreren Subnetzwerken bereitstellen.

Die für ein Subnetzwerk vereinbarte Dienstgüteklasse kann gemäß einer Ausführungsform als die Mindest-Dienstgüteklasse verstanden werden, mit welcher ein oder mehrere Datenverkehre geführt werden.

Ein Subnetzwerk kann auch weitere Dienstgüteklassen unterstützen, weiche höhere Dienstgüten als die Dienstgüte der jeweils vereinbarten Dienstgüteklasse aufweisen. Der zentrale Dienstgütemanager kann daher auch Funkzugangsressourcen für höhere Dienstgüteklassen in Funkzugangsentitäten mittels des Steuerparameters einstellen, sollte ein Datenverkehr eine höhere als die vereinbarte Dienstgüteklasse benötigen.

Gemäß einer Ausführungsform umfasst das Verfahren das Übermitteln einer Ressourcennachricht durch die erste Funkzugangsentität an den zentralen Dienstgütemanager, wobei die Ressourcennachricht die Verfügbarkeit der Funkzugangsressource gemäß dem übermittelten Steuerparameter anzeigt. Durch die Ressourcennachricht wird somit die Verfügbarkeit oder dir Nicht-verfügbarkeit der geforderten Funkzugangsressource angezeigt.

Gemäß einer Ausführungsform initiiert der zentrale Dienstgütemanager eine Übergabe der Kommunikationsverbindung des ersten Subnetzwerks, beispielswiese einen Handover, von der ersten Funkzugangsentität zu einer zweiten Funkzugangsentität der Mehrzahl der Funkzugangsentitäten, falls die Ressourcennachricht anzeigt, dass die Funkzugangsressource der ersten Funkzugangsentität für die Kommunikationsverbindung mit der ersten Dienstgüteklasse nicht verfügbar ist, und wobei die erste Funkzugangsentität die Übergabe der Kommunikationsverbindung des ersten Subnetzwerkes zu der zweiten Funkzugangsentität einleitet, oder wobei die Kommunikationsverbindung des ersten Subnetzwerks über die erste Funkzugangsentität geführt wird, falls die Ressourcennachricht die Verfügbarkeit der Funkzugangsressource gemäß dem übermittelten Steuerparameter anzeigt, wobei die Kommunikationsverbindung über die erste Funkzugangsentität geführt wird, oder wobei die Kommunikationsverbindung an die zweite Funkzugangsentität, insbesondere durch den zentralen Dienstgütemanager und/oder den Ressourcenmanager der ersten Funkzugangsentität, übergeben wird. Dadurch wird sichergestellt, dass die Kommunikationsverbindung mit der für das jeweilige Subnetzwerk geforderten Dienstgüteklasse aufgebaut bzw. aufrechterhalten werden kann. Ferner ist es auf diese Weise möglich, die Funkzugangsressourcen von verteilten Funkzugangsentitäten insgesamt effizienter auszunutzen, sowohl im Downlink als auch im Uplink.

Gemäß einer Ausführungsform können die Subnetzwerke jeweils auch unterschiedliche Dienstgüten unterstützen, welche Datenströmen oder Benutzern zugeordnet sind. Der zentrale Dienstgütemanager kann daher Angaben über diese Dienstgüten an eine oder mehrere Funkzugangsentitäten übermitteln.

Die Funkzugangsentitäten weisen gemäß einer Ausführungsform den Datenströmen und/oder Subnetzwerken diejenigen Kommunikationsressourcen in Abhängigkeit des Steuerparameters zu, welche für die Einhaltung der jeweiligen Dienstgütekasse benötigt werden. Hierzu kann der zentrale Dienstgütemanager eine Datenbank oder eine Look-up-Tabelle aufweisen, in welcher die Funkzugangsressourcen und/oder die Verarbeitungsressourcen den Dienstgüteklassen zugeordnet sind.

Für ein Subnetzwerk können gemäß einer Ausführungsform eine oder mehrere Dienstgüteklassen vereinbart sein und dem jeweiligen Subnetzwerk zugeordnet sein. Die Dienstgüteklassen können beispielsweise unterschiedliche Dienstgütequalitäten für unterschiedliche Datenströme oder Services angeben, wie beispielsweise Best-Effort-Service mit einer geringeren Dienstgüte oder eine Ultra-Reliable-Communication mit einer höheren Dienstgüte.

Die Angabe über die Dienstgüteklasse kann die jeweilige Dienstgüteklasse spezifizieren. Die Angabe kann beispielsweise eine QoS-Identifier aufweisen, welcher auf eine Dienstgüte (QoS, Quality of Service) hinweist.

Die Subnetzwerke können unterschiedliche Services bereitstellen. So kann ein erstes Subnetzwerl ein LTE-Subnetzwerk mit einer Dienstgüteklasse, ein weiteres Subnetzwerk kann ein mMTC-Subnetzwerk mit einer oder mehreren Dienstgüteklassen, und ein weiteres Subnetzwerk kann ein Car-to-X-Subnetzwerk sein, welches zwei Dienstgüteklassen unterstützt, wie beispielsweise Best Effort oder Ultra-Reliable-Communication.

Gemäß einer Ausführungsform teilt die erste Funkzugangsentität die Funkzugangsressourcen der ersten Funkzugangsentität für die Kommunikationsverbindung in Abhängigkeit von dem Steuerparameter über die Dienstgüteklasse des ersten Subnetzwerks zu.

Gemäß einer Ausführungsform initiiert der zentrale Dienstgütemanager die Übergabe der Kommunikationsverbindung des ersten Subnetzwerks von der ersten Funkzugangsentität zu der zweiten Funkzugangsentität gemäß einem Optimierungsparameter. Der Optimierungsparameter kann beispielsweise diejenige Funkzugangstechnologie anzeigen, welche für einen bestimmten Service oder Datenstrom geeigneter als eine andere Technologie ist.

Gemäß einer Ausführungsform umfasst der Optimierungsparameter zumindest einen der folgenden Optimierungsparameter: Verfügbarkeit von Funkzugangsressourcen und/oder Datenverarbeitungsressourcen von Funkzugangsentitäten für die jeweilige Kommunikationsverbindung mit der jeweiligen Dienstgüteklasse, Lastausgleich unter den Funkzugangsentitäten, Auswahl einer Funkzugangsentitäten mit den geringsten Funkzugangsressourcen, welche die jeweilige Dienstgüteklasse erfüllen, Dienstgüteanforderungen an einen Datenstrom.

Gemäß einer Ausführungsform ist pro Dienstgüteklasse eine Dienstgütevereinbarung geschlossen.

Gemäß einer Ausführungsform entsprechen die Dienstgüteklassen den QCI-Klassen (QCI: QoS Class Identifier), beispielsweise eines LTE-Kommunikationssystems.

Gemäß einer Ausführungsform sind die Funktionen der Subnetzwerke durch einen Netzwerk-Orchestrierer vorgegeben, wobei der zentrale Dienstgütemanager eine Nachricht an den Netzwerk-Orchestrierer aussendet, falls eine Dienstgütevereinbarung nicht eingehalten werden kann. Der Netzwerk-Orchestrierer kann ansprechend hierauf eine alternative Route für eine Kommunikationsverbindung wählen oder das Kommunikationsnetz rekonfigurieren. Der Netzwerk-Orchestrierer kann ferner einem Subnetzwerk weitere Funktionen zuweisen, um die Dienstgüteklasse gemäß der betroffenen Dienstgütevereinbarung zu erfüllen. Der Netzwerk-Orchestrierer kann eine Instanz des Kommunikationsnetzwerks sein.

Gemäß einer Ausführungsform übermittelt der Netzwerk-Orchestrierer dem zentralen Dienstgütemanager eine Angabe über eine alternative Route für die Kommunikationsverbindung.

Gemäß einer Ausführungsform definiert der Steuerparameter zumindest eine der folgenden Funkzugangsressourcen: Bandbreite, Frequenzspektrum, Zeitressourcen, Anzahl und/oder Zeitlage von Übertragungsrahmen, Anzahl und/oder Zeitlage von Zeitschlitzen, Sendeleistung, Datenrate, Bitfehlerrate, Blockfehlerrate, Latenzzeit. Der jeweilige Ressourcenmanager kann gemäß dem übermittelten Steuerparameter die Funkzugangsressourcen dem jeweiligen Subnetzwerk zuweisen.

Gemäß einer Ausführungsform wird der Steuerparameter von dem zentralen Dienstgütemanager zu dem jeweiligen Ressourcenmanager über das Kommunikationsnetzwerk, insbesondere über Kontrollkanäle des Kommunikationsnetzwerks, übermittelt. Hierzu können auch Netzwerkschnittstellen vorgesehen sein, wie beispielsweise APIs (Application Programmable Interface).

Gemäß einer Ausführungsform sind die Funkzugangseinheiten Basisstationen oder Router, insbesondere drahtlose Router. Die Funkzugangseinheiten stellen die Funkzugangsressourcen beispielsweise für eine Kommunikation zwischen einem mobilen Endgerät (UE) und einem Subnetzwerk bereit. Dies kann gemäß einer oder mehreren Funkzugangstechnologien (RAT: Radio Acces Technologie) bewirkt werden.

Gemäß einer Ausführungsform sind die Funkzugangsentitäten für unterschiedliche Funkzugangstechnologien ausgelegt sind, insbesondere LTE, WLAN, UMTS, GSM, 5G und Kommunikationstechnologien für Machine Type Communication (MTC).

Gemäß einer Ausführungsform ist das Kommunikationsnetzwerk ein Kommunikationssetzwerk zumindest der fünften (5G) Generation ist, und wobei die Subnetzwerke Netzwerk-Slices sind.

Gemäß einer Ausführungsform sind die Subnetzwerke kommunikationstechnisch voneinander isoliert. Die Subnetzwerke formen beispielweise Punkt-zu-Punkt-Netzwerke.

Gemäß einer Ausführungsform ist jeder Dienstgüteklasse ein Steuerparameter zugeordnet, welcher zumindest eine Funkzugangsressource charakterisiert, und wobei der zentrale Dienstgütemanager denjenigen Steuerparameter auswählt, welcher der jeweiligen Dienstgüteklasse zugeordnet ist.

Die Steuerparameter können in einer Datenbank des zentralen Dienstgütemanagers abgelegt sein. Der zentrale Dienstgütemanager kann den Steuerparameter jedoch von einer Netzwerkentität, beispielsweise einem Netzwerk-Orchestrierer, einfordern.

Gemäß einem zweiten Aspekt betrifft die Erfindung ein Kommunikationssystem zur Steuerung von Funkzugangsressourcen in einem Kommunikationsnetzwerk, wobei das Kommunikationsnetzwerk eine Mehrzahl von Subnetzwerken mit einem ersten Subnetzwerk und mit einem Subnetzwerk aufweist, wobei jedem Subnetzwerk eine vorgegebene Dienstgüteklasse gemäß einer Dienstgütevereinbarung zugeordnet ist, mit einem zentralen Dienstgütemanager zur Verwaltung von Dienstgüteklassen der Subnetzwerke, und zumindest einer Funkzugangsentität für einen Funkzugang zu einem Subnetzwerk der Subnetzwerke, wobei die Funkzugangsentität einen steuerbaren Ressourcenmanager zur Einstellung zumindest einer Funkzugangsressource der Funkzugangsentität aufweist, wobei die Ressourcenmanager durch den zentralen Dienstgütemanager steuerbar ist, wobei der zentrale Dienstgütemanager ausgebildet ist, einen Steuerparameter an den Ressourcenmanager einer ersten Funkzugangsentität auszusenden, wobei der Steuerparameter zumindest eine Funkzugangsressource der ersten Funkzugangsentität für eine Kommunikationsverbindung des Subnetzwerks über die erste Funkzugangsentität mit einer ersten Dienstgüteklasse, welche dem ersten Subnetzwerk zugeordnet ist, oder eine Übergabe der Kommunikationsverbindung an eine zweite Funkzugangsentität definiert; und wobei der Ressourcenmanager der ersten Funkzugangsentität ausgebildet ist, gemäß dem übermittelten Steuerparameter die Funkzugangsressource der ersten Funkzugangsentität einzustellen, oder die Kommunikationsverbindung an die zweite Funkzugangsentität zu übergeben.

Das Kommunikationssystem und dessen Entitäten sind gemäß einer Ausführungsform ausgebildet, das Verfahren gemäß dem ersten Aspekt durchzuführen.

Gemäß einem dritten Aspekt betrifft die Erfindung einen zentralen Dienstgütemanager, welcher ausgebildet ist, Funkzugangsressourcen in einem Kommunikationsnetzwerk in Abhängigkeit von Dienstgüteklassen einer Mehrzahl von voneinander getrennten Subnetzwerken des Kommunikationsnetzwerks zu steuern, wobei jedem Subnetzwerk eine vorgegebene Dienstgüteklasse gemäß einer Dienstgütevereinbarung zugeordnet ist, wobei in dem Kommunikationsnetzwerk ferner ein Funkzugangsnetzwerk mit einer Mehrzahl von Funkzugangsentitäten für einen Funkzugang zu der Mehrzahl der Subnetzwerke angeordnet ist, mit einem Speicher, in welchem Steuerparameter, welche Dienstgüteklassen der Subnetzwerke zugeordnet sind, gespeichert sind, wobei jeder Steuerparameter zumindest eine Funkzugangsressource für die jeweilige Dienstgüteklasse angibt, einem Prozessor, welcher ausgebildet ist, einen Steuerparameter für die jeweilige Dienstklasse auszuwählen, wobei der Steuerparameter zumindest eine Funkzugangsressource der Funkzugangsentität für eine Kommunikationsverbindung des Subnetzwerks über die Funkzugangsentität mit einer Dienstgüteklasse, welche dem Subnetzwerk zugeordnet ist, definiert, oder einen Steuerparameter für eine Übergabe der Kommunikationsverbindung an eine zweite Funkzugangsentität zu erzeugen; und einer Kommunikationsschnittstelle, welche ausgebildet ist, den Steuerparameter an einen Ressourcenmanager einer Funkzugangsentität des Funkzugangsnetzwerks auszusenden, um den Ressourcenmanager zu steuern.

Gemäß einer Ausführungsform weist der zentrale Dienstgütemanager eine Datenbank mit Dienstgüteklassen für die Subnetzwerke auf.

Der zentrale Dienstgütemanager kann zur Ausführung des Verfahrens gemäß dem ersten und/oder dem zweiten Aspekt und/oder dem dritten Aspekt vorgesehen sein.

Der zentrale Dienstgütemanager kann in allen Aspekten und Ausführungsformen eingesetzt werden.

Weitere Ausführungsbeispiele werden Bezug nehmend auf die beiliegenden Zeichnungen erläutert. Es zeigen:
- Fig. 1: eine beispielhafte 5G-Systemarchitektur;
- Fig. 2: eine schematische Darstellung eines 5G-Kommunikationsnetzwerks;
- Fig. 3: ein Kommunikationssystem;
- Fig. 4: ein Kommunikationssystem; und
- Fig. 5: ein schematisches Blockdiagramm eines zentralen Dienstgütemanagers.

Die im Folgenden vorgestellten Verfahren und Systeme können von verschiedener Art sein. Die einzelnen beschriebenen Elemente können durch Hardware- oder Softwarekomponenten realisiert sein, beispielsweise elektronische Komponenten, die durch verschiedene Technologien hergestellt werden können und zum Beispiel Halbleiterchips, ASICs, Mikroprozessoren, digitale Signalprozessoren, integrierte elektrische Schaltungen, elektrooptische Schaltungen und/oder passive Bauelemente umfassen.

Die im Folgenden vorgestellten Geräte, Systeme und Verfahren sind dafür geeignet, Informationen über ein Kommunikationsnetzwerk zu übertragen. Der Begriff Kommunikationsnetzwerk oder Kommunikationsnetz bezeichnet dabei die technische Infrastruktur, auf der die Übertragung von Signalen stattfindet. Das Kommunikationsnetz umfasst im Wesentlichen das Vermittlungsnetz, in dem die Übertragung und Vermittlung der Signale zwischen den ortsfesten Einrichtungen und Plattformen des Mobilfunknetzes oder Festnetzes stattfinden, sowie das Funkzugangsnetz, in dem die Übertragung der Signale zwischen einer Netzwerkzugangseinrichtung und dem Kommunikationsendgerät stattfindet. Das Kommunikationsnetz kann hierbei sowohl Komponenten eines Mobilfunknetzes als auch Komponenten eines Festnetzes umfassen. Im Mobilfunknetz wird das Funkzugangsnetz auch als Luftschnittstelle bezeichnet und umfasst beispielsweise eine Basisstation (NodeB, eNodeB, Funkzelle) mit Mobilfunkantenne, um die Kommunikation zu einem Kommunikationsendgerät wie beispielsweise einem Mobiltelefon bzw. Smartphone oder einer mobilen Einrichtung mit Mobilfunkadapter aufzubauen. Im Festnetz umfasst das Funkzugangsnetz beispielsweise einen DSLAM (Digital Subscriber Line Access Multiplexer), um die Kommunikationsendgeräte mehrerer Teilnehmer draht- bzw. kabelgebunden anzuschließen. Über das Vermittlungsnetz kann die Kommunikation in weitere Netze, beispielsweise anderer Netzbetreiber, z.B. Auslandsnetze, weitervermittelt werden.

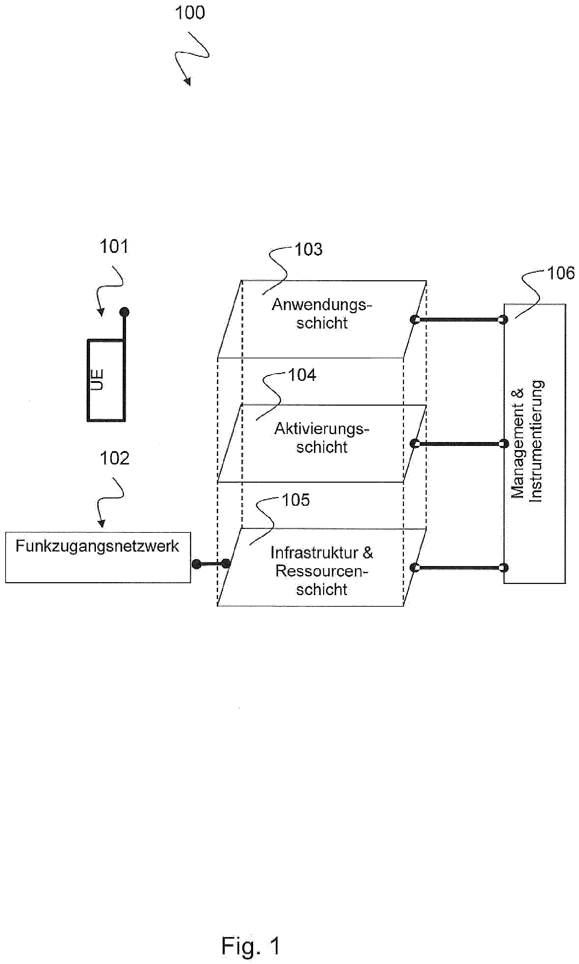

Die im Folgenden vorgestellten Geräte, Systeme und Verfahren sind dazu vorgesehen, die Kommunikation in Kommunikationsnetzen zu steigern, insbesondere in Kommunikationsnetzen gemäß der im Folgenden vorgestellten 5G Systemarchitektur. Fig. 1 zeigt eine schematische Darstellung einer solchen 5G Systemarchitektur 100. Die 5G Systemarchitektur 100 umfasst einen Bereich mit 5G Kommunikationsendgeräten 101, die über verschiedene Zugangstechnologien 102 mit einer mehrschichtigen Kommunikationsstruktur verbunden sind, welche eine Infrastruktur- & Ressourcenschicht 105, eine Aktivierungsschicht 104 und eine Anwendungsschicht 103 umfasst, die über eine Management- & Instrumentierungsebene 106 verwaltet werden.

Die Infrastruktur- & Ressourcenschicht 105 umfasst die physikalischen Ressourcen einer konvergenten Netzwerkstruktur aus Festnetz- und Mobilfunknetzkomponenten (sog. Fixed-Mobile Convergence) mit Zugangsknoten, Cloud-Knoten (bestehend aus Verarbeitungs- und Speicherknoten), 5G Geräten wie z.B. Mobiltelefonen, tragbaren Geräten, CPEs, Maschinenkommunikationsmodulen und anderen, Netzwerkknoten und zugehörigen Links. 5G Geräte können vielfältige und konfigurierbare Fähigkeiten umfassen und beispielsweise als Relay oder Hub agieren oder abhängig von dem jeweiligen Kontext als Computer/Speicher Ressource arbeiten. Diese Ressourcen werden den höheren Schichten 104, 103 und der Management- & Instrumentierungsebene 106 über entsprechend APIs (Anwendungsprogramm-Schnittstellen) zur Verfügung gestellt. Das Überwachen der Leistungsfähigkeit und der Konfigurationen sind inhärenter Teil solcher APIs.

Die Aktivierungsschicht 104 umfasst eine Bibliothek von Funktionen, die innerhalb eines konvergierten Netzwerks in Form von Bausteinen einer modularen Architektur benötigt werden. Diese umfassen Funktionen, die durch Softwaremodule realisiert werden, die von einem Aufbewahrungsort der gewünschten Lokation abgerufen werden können, und einen Satz von Konfigurationsparametern für bestimmte Teile des Netzwerks, z.B. den Funkzugang. Diese Funktionen und Fähigkeiten können auf Anforderung durch die Management- & Instrumentierungsebene 106 aufgerufen werden durch Nutzung der dafür vorgesehenen APIs. Für bestimmte Funktionen können mehrfache Varianten existieren, z.B. verschiedene Implementierungen derselben Funktionalität welche verschiedene Leistungsfähigkeit oder Charakteristik haben. Die verschiedenen Grade der Leistungsfähigkeit und der angebotenen Fähigkeiten können dazu verwendet werden, um die Netzwerkfunktionalitäten wesentlich weiter zu unterscheiden als es in heutigen Netzen möglich ist, z.B. als Mobilitätsfunktion eine nomadische Mobilität, eine Fahrzeugmobilität oder eine Luftverkehrsmobilität in Abhängigkeit der spezifischen Bedürfnisse anzubieten.

Die Anwendungsschicht 103 umfasst spezifische Anwendungen und Dienste des Netzwerkbetreibers, des Unternehmens, des vertikalen Operators oder von Drittparteien, die das 5G Netzwerk nutzen. Die Schnittstelle zu der Management- & Instrumentierungsebene 106 erlaubt zum Beispiel, bestimmte, d.h. dedizierte Netzwerk Slices (Netzwerkscheiben) für eine Anwendung aufzubauen, oder eine Anwendung einem existierenden Netzwerk Slice zuzuweisen.

Die Management- & Instrumentierungsebene 106 ist der Kontaktpunkt, um die geforderten Anwendungsfälle in tatsächliche Netzwerkfunktionen und Slices umzusetzen. Sie definiert die Netzwerk Slices für ein gegebenes Anwendungsszenario, verkettet die dafür relevanten modularen Netzwerkfunktionen, ordnet die relevanten Leistungsfähigkeitskonfigurationen zu und bildet alles auf die Ressourcen der Infrastruktur- & Ressourcenschicht 105 ab. Die Management- & Instrumentierungsebene 106 verwaltet auch die Skalierung der Kapazität dieser Funktionen als auch ihre geographische Verteilung. In bestimmten Anwendungsfällen kann sie auch Fähigkeiten aufweisen, die es Drittparteien erlauben, durch Nutzung der APIs ihre eigenen Netzwerk Slices zu erzeugen und zu verwalten. Aufgrund der vielzähligen Aufgaben der Management- & Instrumentierungsebene 106 handelt es sich dabei nicht um einen monolithischen Block von Funktionalität sondern vielmehr um eine Sammlung modularer Funktionen, die Fortschritte integrieren, die in verschiedenen Netzwerkdomänen erzielt wurden, wie beispielsweise NFV (Network Function Virtualization, Netzwerkfunktionsvirtualisierung), SDN (Software-defined Networking, Software-definierte Vernetzung) oder SON (Self-organizing Networks, selbstorganisierende Netzwerke). Die Management- & Instrumentierungsebene 106 nutzt dabei datenunterstützte Intelligenz, um alle Aspekte der Dienstanordnung und -bereitstellung zu optimieren.

Die hier vorgestellten Geräte, Systeme und Verfahren sind dazu vorgesehen, die Kommunikation in Kommunikationsnetzen zu verbessern, insbesondere in 5G Kommunikationsnetzen mit mehreren Netzwerk Slices (Netzwerkscheiben bzw. Subnetzwerke), wie im Folgenden beschrieben.

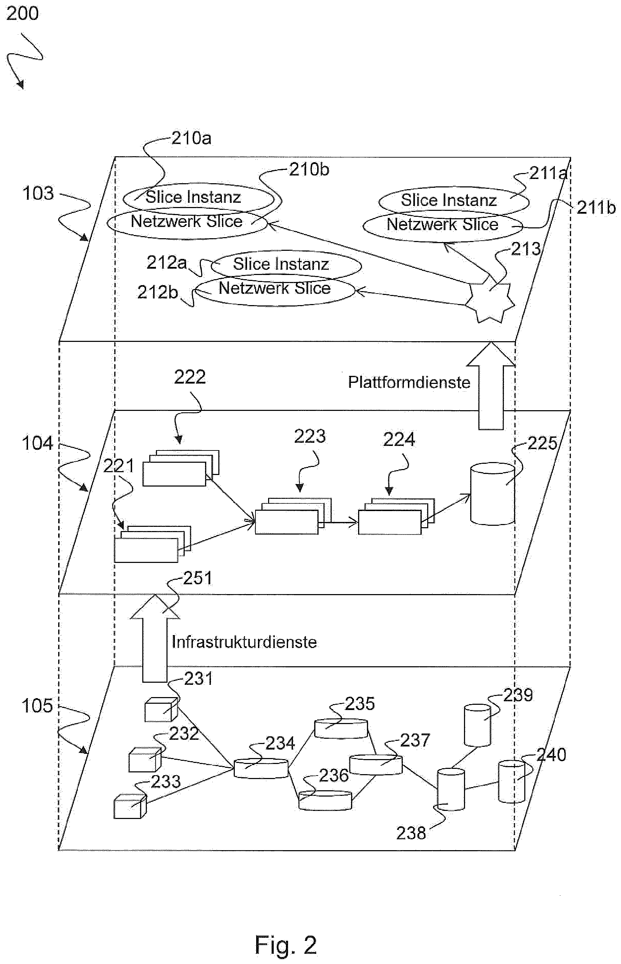

Fig. 2 zeigt eine schematische Darstellung eines 5G-Kommunikationsnetzwerks 200 mit mehreren Netzwerk Slices (Netzwerkscheiben bzw. Subnetzwerke). Das 5G-Kommunikationsnetzwerks 200 umfasst eine Infrastruktur- & Ressourcenschicht 105, eine Aktivierungsschicht 104 und eine Anwendungsschicht 103.

Die Infrastruktur- & Ressourcenschicht 105 umfasst alle physikalischen Aktiva, die einem Netzwerkbetreiber zugeordnet sind, d.h. Standorte, Kabel, Netzwerkknoten etc. Diese Schicht 105 bildet die Grundlage für alle Netzwerk Slices. Sie ist so generisch wie möglich aufgebaut ohne zu viele spezialisierte physikalische Einheiten. Die Infrastruktur- & Ressourcenschicht 105 verschleiert jede Art von anwenderspezifischer Implementierung gegenüber den oberen Schichten, so dass die verbleibenden Systeme für verschiedene Slices bestmöglich genutzt werden können. Komponenten der Infrastruktur- & Ressourcenschicht 105 basieren auf Hardware und Software bzw. Firmware, die für die jeweilige Operation benötigt wird und dabei als Infrastruktur- & Ressourcenschicht 105 den darüber liegenden Schichten als Ressourcenobjekte zu Verfügung gestellt wird. Beispielsweise umfassen Objekte der Infrastruktur- & Ressourcenschicht 105 virtuelle Maschinen, virtuelle Links bzw. Verbindungen und virtuelle Netzwerke, z.B. virtuelle Zugangsknoten 231, 232, 233, virtuelle Netzwerkknoten 234, 235, 236, 237 und virtuelle Computerknoten 238, 239, 240. Wie der Begriff "virtuell" bereits sagt, stellt die Infrastruktur- & Ressourcenschicht 105 die Objekte in der Form einer "Infrastruktur als Dienst" 251, d.h. in einer abstrahierenden, virtualisierten Form der nächsthöheren Schicht 104 zur Verfügung.

Die Aktivierungsschicht 104 ist oberhalb der Infrastruktur- & Ressourcenschicht 105 angeordnet. Sie nutzt die Objekte der Infrastruktur- & Ressourcenschicht 105 und fügt diesen zusätzliche Funktionalität in Form von Software Objekten /VNFs hinzu um das Erzeugen von jeder Art von Netzwerk Slices zu ermöglichen und so eine Plattform als Dienst der nächsthöheren Schicht 103 bereitzustellen.

Softwareobjekte können in jeder Granularität existieren, und ein winziges oder ein sehr großes Fragment eines Netzwerk-Slice umfassen. Um die Erzeugung von Netzwerk Slices auf einem geeigneten Abstraktionslevel zu erlauben können in der Aktivierungsschicht 104 verschiedene abstrahierte Objekte 221 mit anderen abstrahierten Objekten und mit virtuellen Netzwerkfunktionen 222 kombiniert werden, um kombinierte Objekte 223 zu bilden, die in aggregierte Objekten 224 überführt werden können und in einer Objektbibliothek 225 der nächsthöheren Ebene zur Verfügung gestellt werden. Damit kann die Komplexität hinter den Netzwerk Slices verborgen werden. Beispielsweise kann ein Nutzer einen mobilen Breitband-Slice erzeugen und dabei lediglich KPI (Key Performance Indikator) definieren ohne dabei spezifische Features wie individuelle lokale Antennenbedeckung, Backhaul-Verbindungen und spezifische Parametrisierungsgrade spezifizieren zu müssen. Um eine offene Umgebung zu unterstützen und es zu erlauben, Netzwerkfunktionen auf Anforderung hinzuzufügen oder zu löschen, ist eine wichtige Fähigkeit der Aktivierungsschicht 104, dass sie die dynamische Umordnung von Funktionen und Konnektivitäten in einem Netzwerk Slice unterstützt, z.B. durch Verwendung von SFC ("Service Function Chaining" = Dienstfunktionenverkettung) oder modifizierender Software, so dass die Funktionalität eines Slice vollständig vordefiniert werden kann und sowohl näherungsweise statische Softwaremodule als auch dynamisch hinzufügbare Softwaremodule umfassen kann.

Ein Netzwerk Slice kann dabei als software-definierte Entität betrachtet werden, die auf einem Satz von Objekten basiert, welche ein vollständiges Netzwerk definieren. Die Aktivierungsschicht 104 spielt für den Erfolg dieses Konzepts eine Schlüsselrolle da sie alle Softwareobjekte umfasst kann, die notwendig sind, um die Netzwerk Slices und die entsprechenden Fertigkeiten zum Handhaben der Objekte bereitzustellen. Die Aktivierungsschicht 104 kann als eine Art von Netzwerk-Betriebssystem betrachtet werden komplementiert durch eine Netzwerkerzeugungsumgebung. Eine wesentliche Aufgabe der Aktivierungsschicht 104 ist das Definieren der entsprechenden Abstraktionsebenen. So haben Netzwerkbetreiber ausreichend Freiraum um ihre Netzwerk Slices zu designen während der Plattform-Betreiber immer noch die physikalischen Knoten instand halten und optimieren kann. So wird beispielsweise die Ausführung der alltäglichen Aufgaben wie das Hinzufügen oder Ersetzen von NodeBs etc. ohne das Einschreiten der Netzwerkkunden unterstützt. Die Definition geeigneter Objekte, welche ein vollständiges Telekommunikationsnetz modellieren, ist eine der wesentlichen Aufgaben der Aktivierungsschicht 104 beim Entwickeln der Netzwerk Slices Umgebung.

Ein Netzwerk Slice, auch als 5G Slice bezeichnet unterstützt die Kommunikationsdienste eines bestimmten Verbindungstyps mit einer bestimmten Art der Handhabung der C (Control bzw. Steuerungs-) und U-(User Data bzw. Nutzerdaten) Schicht. Ein 5G Slice setzt sich zusammen aus einer Sammlung von verschiedenen 5G Netzwerkfunktionen und spezifischen Funkzugangstechnologie- (RAT) Einstellungen, die zusammen kombiniert werden zum Nutzen des spezifischen Anwendungsfalls bzw. Use Case. Daher kann ein 5G Slice alle Domänen des Netzwerks umspannen, z.B. Softwaremodule, die auf Cloud-Knoten laufen, spezifische Konfigurationen des Transportnetzwerks, die eine flexible Lokation der Funktionen unterstützen, eine bestimmte Funkkonfiguration oder selbst eine bestimmte Zugangstechnologie so gut wie einer Konfiguration der 5G Geräte. Nicht alle Slices enthalten dieselben Funktionen, einige Funktionen die heute als wesentlich erscheinen für eine mobiles Netzwerk können sogar in einigen Slices nicht vorkommen. Die Intention des 5G Slice ist es, nur die Funktionen bereitzustellen, die für den spezifischen Use Case notwendig sind und alle anderen unnötigen Funktionalitäten zu vermeiden. Die Flexibilität hinter dem Slice Konzept ist der Schlüssel sowohl für das Ausweiten existierender Anwendungsfälle als auch für das Erzeugen neuer Anwendungsfälle. Drittpartei-Geräten kann damit Erlaubnis gewährt werden, bestimmte Aspekte des Slicing über geeignete APIs zu steuern, um so maßgeschneiderte Dienste bereitstellen zu können.

Die Anwendungsschicht 103 umfasst alle erzeugten Netzwerk Slices 210b, 211b, 212b und bietet diese als "Netzwerk als Service" verschiedenen Netzwerknutzern, z.B. verschiedenen Kunden an. Das Konzept erlaubt die Wiederbenutzung von definierten Netzwerk Slices 210b, 211b, 212b für verschiedene Anwender, z.B. Kunden, beispielsweise als eine neue Netzwerk Slice Instanz 210a, 211a, 212a. D.h. ein Netzwerk Slice 210b, 211b, 212b, welcher beispielsweise einer Automotive Anwendung zugeordnet ist, kann auch für Anwendungen verschiedener anderer industrieller Anwendungen genutzt werden. Die Slices Instanzen 210a, 211a, 212a, die von einem ersten Anwender erzeugt wurden, können beispielsweise unabhängig von den Slice Instanzen sein, die von einem zweiten Anwender erzeugt wurden, und das obwohl die gesamte Netzwerk Slice Funktionalität dieselbe sein kann.

Die Slices 210b, 211b, 212b formen Ausführungsbeispiele von Subnetzwerken eines Kommunikationsnetzwerks.

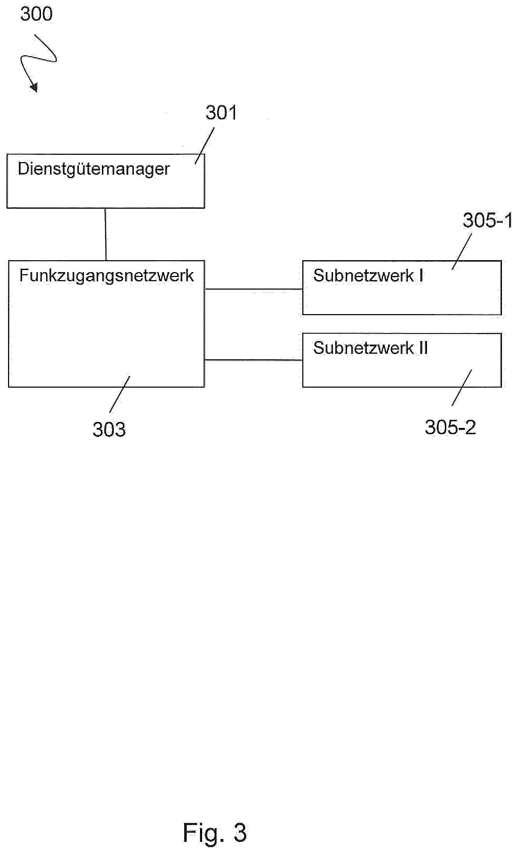

Fig. 3 zeigt ein Kommunikationssystem 300 zur Steuerung von Funkzugangsressourcen in einem Kommunikationsnetzwerk 302 mit einer Mehrzahl von Subnetzwerken 305, mit einem ersten Subnetzwerk 305-1 und mit einem Subnetzwerk 305-2, wobei jedem Subnetzwerk 305, beispielsweise einer Slice, eine vorgegebene Dienstgüteklasse gemäß einer Dienstgütevereinbarung zugeordnet ist, wobei die Dienstgüteklassen der Subnetzwerke 305-1, 305-2 durch einen zentralen Dienstgütemanager 301 verwaltet werden, wobei das Kommunikationsnetzwerk ferner ein Funkzugangsnetzwerk 303 mit einer Mehrzahl von in Fig. 3 nicht dargestellten Funkzugangsentitäten, beispielsweise Basisstationen, für einen Funkzugang zu der Mehrzahl der Subnetzwerke 305 aufweist.

Die Dienstgüteklassen geben Dienstgüten (QoS) für die Subnetzwerke 305-1, 305-2 an. Die Dienstgüteklassen können beispielsweise eine Datenrate, eine Latenzzeit, eine Bit- oder Blockfehlerrate, Frequenz- und/oder Ressourcen wie Bandbreite oder Zeitschlitze spezifizieren bzw. angeben. Die Dienstgüteklassen können gemäß einer Dienstgütevereinbarung (SLA: Service Level Agreement) für die Subnetzwerke 305 bzw. für die Datenströme der Subnetzwerke 305 definiert sein. Die Dienstgüteklassen der Subnetzwerke 305 sind gemäß einer Ausführungsform Benutzer unabhängig. Die Subnetzwerke 305 können darüber hinaus jedoch Benutzer abhängige Dienstklassen berücksichtigen.

Der zentrale Dienstgütemanager 301 ist beispielswiese der Management- & Instrumentierungsebene 106 zugeordnet und verwaltet die Dienstgüteklassen der Subnetzwerke 305.

Das Funkzugangsnetzwerk 303 (RAN, Radio Access Network) ist für den Funkzugang zu den Subnetzwerken 305 vorgesehen. Das Funkzugangsnetzwerk 303 kann beispielswiese Basisstationen, Antennen, Router und weitere RAN-Komponenten aufweisen.

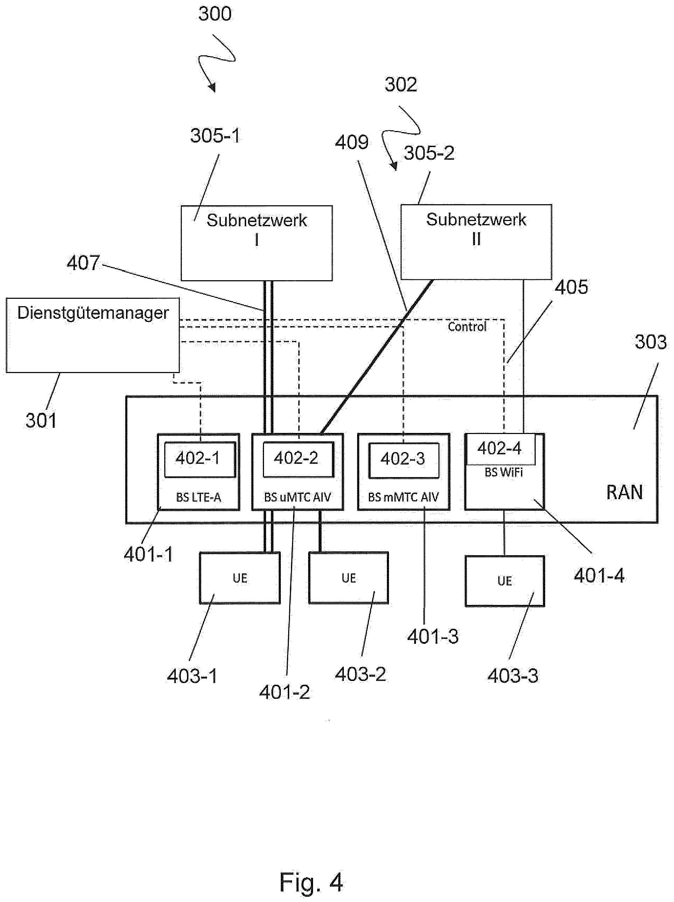

Die Ressourcensteuerung wird anhand des in Fig. 4 dargestellten Kommunikationsnetzwerks 302 gemäß einer Ausführungsform beschrieben.

Das Funkzugangsnetzwerk 303 kann beispielsweise eine Mehrzahl von Basisstationen, beispielsweise die Basisstationen 401-1 bis 401-4 aufweisen, welche unterschiedlichen Funkzugangstechnologien (RAT: Radio Acces Technology), wie beispielsweise LTE, WLAN, UMTS, GSM, und Funkzugangstechnologien für Machine Type Communication (MTC) zugeordnet sein können. Auf diese Weise können mobile Endgeräte (UE) 403-1, 403-2, 403-3 über die Subnetzwerke 305-1, 305-2 kommunizieren. Im Funkzugangsnetzwerk 303 können jedoch mehr oder weniger Basisstationen angeordnet sein. Die Ausführungsbeispiele beziehen sich daher zumindest auf eine Basisstation.

Der Dienstgütemanager 301 hat beispielsweise eine Datenbank mit Dienstgüteklassen für die Subnetzwerke 305-1, 305-3, welche die Dienstgüten (QoS) definieren, welche in Bezug auf die Subnetzwerke 305-1, 305-3 definiert sind. Die Dienstgüten sind im Falle von 5G-Netzwerken der Management- & Instrumentierungsebene 106 oder eine Orchestrierer, welcher die Subnetzwerke 305-1, 305-3 (Slices) definiert, bekannt. In dem Speicher können ferner Steuerparameter gespeichert sein, welche die notwendigen Funkzugangsressourcen für die jeweilige Dienstgüteklasse, beispielsweise Bandbreite oder Datenrate, definieren.

Alternativ oder zusätzlich kann der Dienstgütemanager 301 die Dienstgüteklassen oder die Steuerparameter von einer übergeordneten Entität wie dem Netzwerk-Orchestrierer oder von den Subnetzwerken 305-1, 305-3 selbst erhalten.

Die Funkzugangsentitäten 401 umfassen jeweils einen Ressourcenmanager 402, welcher ausgebildet ist, die Funkzugangsressourcen der jeweiligen Funkzugangsentität für das jeweilige Subnetzwerk 305 derart einzustellen, dass die für das jeweilige Subnetzwerk 305 geforderte Dienstgüteklasse erreicht werden kann.

Die Ressourcenmanager 402 können ausgebildet sein, die Kommunikationsressourcen der jeweiligen Funkzugangsentität 401 für da jeweilige Subnetzwerk 305 einzustellen. So kann beispielsweise durch den Ressourcenmanager 402-1 der ersten Funkzugangsentität 401-1 einem ersten Subnetzwerk 305-1 mehr Funkzugangs- bzw. Kommunikationsressourcen, beispielswese mehr Bandbreite oder Datenrate, zugewiesen werden als einem zweiten Subnetzwerk 305-2. Auf diese Weise kann eine erste Kommunikationsverbindung 407 mit mehr Funkzugangs- bzw. Kommunikationsressourcen als eine zweite Kommunikationsverbindung 409 ausgestattet werden. Dies ist in Fig. 4 beispielsweise durch die doppelten Verbindungen dargestellt.

Zur Steuerung der Ressourcenmanager 402 übermittelt der Dienstgütemanager 301 an den jeweiligen Ressourcenmanager 402 zumindest einen Steuerparameter, welcher zumindest eine Funkzugangsressource für die jeweilige Dienstgüteklasse des jeweiligen Subnetzwerks 305 angibt. Der Steuerparameter kann mehrere Funkressourcen definieren, beispielsweise Bandbreite, Datenrate, oder Frequenzspektrum. Dadurch werden die Ressourcenmanager 402 gesteuert. Der jeweilige Ressourcenmanager 402 stellt für das betroffene Subnetzwerk 305 Funkressourcen gemäß dem übermittelten Steuerparameter bereit. Diejenigen Funkzugangsressourcen, welche durch den Steuerparameter nicht definiert sind, werden mit einer vorgegebenen Einstellung, beispielsweise Sendeleistung, bereitgestellt.

Die Ressourcenmanager 402 verwalten die Funkzugangsressourcen der Funkzugangsentitäten und sind beispielsweise als Scheduler ausgebildet, um den jeweiligen Subnetzwerk 305 Funkzugangsressourcen wie Bandbreite, Datenrate, Sendeleistung oder Anzahl der Zeitschlitze gemäß dem Steuerparameter zuordnen.

Die jeweilige Funkzugangsentität 401 kann Funkverbindungen für einen oder mehrere Subnetzwerke 305 bereitstellen.

Die jeweilige Funkzugangsentität 401 kann eine Ressourcennachricht an den zentralen Dienstgütemanager 301 übermitteln, wobei die Ressourcennachricht die Verfügbarkeit von Funkzugangsressourcen der ersten Funkzugangsentität 401-1 für eine Kommunikationsverbindung des ersten Subnetzwerks 305-1 mit der vereinbarten Dienstgüteklasse anzeigt.

Verfügt die erste Funkzugangsentität 401-1 über ausreichend Ressourcen, beispielsweise Kommunikationsressourcen, so wird die Kommunikationsverbindung 407 aufgebaut oder aufrechterhalten.

Zeigt die Ressourcennachricht jedoch an, dass die Funkzugangsentität 401-1 nicht genügend Ressourcen für die Einhaltung der geforderten Dienstgüteklasse für das erste Subnetzwerk 305-1 aufweist, so kann der zentrale Dienstgütemanager 301 eine zweite Funkzugangsentität auswählen und ein Handover zu der weiteren Funkzugangsentität, beispielsweise der Funkzugangsentität 401-2, initiieren.

Die zweite Funkzugangsentität 401-2 kann vor der Einleitung der Übergabe der Kommunikationsverbindung in vorstehend beschriebener Weise ebenfalls ein Ressourcensignal an den zentralen Dienstgütemanager 301 übermitteln. Zeigt das Ressourcensignal an, dass die zweite Funkzugangsentität 401-3 ausreichend Ressourcen für die Einhaltung der Dienstgüteklasse für das erste Subnetzwerk 305-1 aufweist, so wird die Kommunikationsverbindung 409 über die zweite Funkzugangsentität 401-2 geführt. Hierbei können auch unterschiedliche Funkzugangstechnologien zum Einsatz kommen.

Gemäß einer Ausführungsform hat das Ressourcen Management in der Management- & Instrumentierungsebene 106, insbesondere der zentrale Dienstgütemanager 301, Kenntnis von den SLAs für die Subnetzwerke 305, in welchen die DienstgüteAnforderungen von Datenströmen, welche den Subnetzwerken 305-1, 305-2 zugeordnet sind, sowie ggf. den Funkkanaleigenschaften im Funkzugangsnetz. Basierend auf dieser Information kann der zentrale Dienstgütemanager 301 entscheiden, welcher Datenstrom über welche Basisstation sowie Funkzugangstechnologie übertragen werden soll (Datenstromsteuerung). Falls beispielsweise nicht alle QoS-Anforderungen erfüllt werden können, kann der zentrale Dienstgütemanager 301 entscheiden, den jeweiligen Datenstrom über diejenige Funkzugangstechnologie und/oder Funkzugangsentität zu führen, welche eine nächstniedrigere Dienstgüteklasse garantieren. Auf diese Weise wird einer starken Degradierung der Dienstgüte entgegengewirkt.

Die Dienstgüteklasse kann beispielsweise angeben, dass einem Subnetzwerk 95% der Kommunikationszeit mit 10 Mbps zugesichert werden.

Die Ressourcensteuerung kann beispielsweise darin bestehen, dass demjenigen Subnetzwerk 305 mit einer höheren Dienstgüteklasse gemäß einer Dienstgütevereinbarung, beispielsweise mit mehr Bandbreite, mehr Kommunikationsressourcen bzw. Funkzugangsressourcen zugewiesen werden als einem anderen Subnetzwerk mit einer geringeren Dienstgüteklasse.

Der zentrale Dienstgütemanager 301 steuert die Ressourcenmanager 402 über Kommunikationsverbindungen 405, welche beispielsweise Control-verbindungen sind.

Die Übergabe der Kommunikationsverbindung kann jedoch in Abhängigkeit von einer Wahl einer für einen Datenstrom effizienteren Funkzugangstechnologie oder von einem Optimierungsparameter, beispielsweise wie vorgenannt, erfolgen.

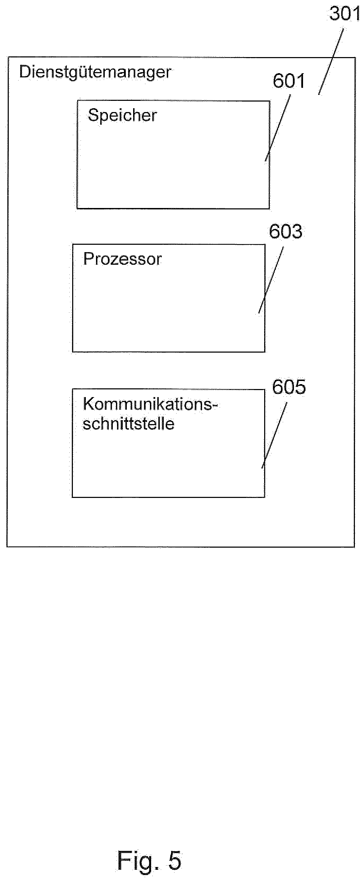

Fig. 5 zeigt ein schematisches Blockdiagramm des zentralen Dienstgütemanagers 301, welcher in sämtlichen Ausführungsformen eingesetzt werden kann. Der zentrale Dienstgütemanager 301 umfasst einem Speicher 601, in welchem Steuerparameter, welche Dienstgüteklassen der Subnetzwerke zugeordnet sind, gespeichert sind, wobei jeder Steuerparameter zumindest eine Funkzugangsressource für die jeweilige Dienstgüteklasse angibt.

Der zentrale Dienstgütemanager 301 umfasst ferner einen Prozessor 603, welcher ausgebildet ist, einen Steuerparameter für die jeweilige Dienstgüteklasse auszuwählen, wobei der Steuerparameter zumindest eine Funkzugangsressource der Funkzugangsentität für eine Kommunikationsverbindung des Subnetzwerks über die Funkzugangsentität mit einer Dienstgüteklasse, welche dem Subnetzwerk zugeordnet ist, definiert, oder einen Steuerparameter für eine Übergabe der Kommunikationsverbindung an eine zweite Funkzugangsentität 401 zu erzeugen.

Die Kommunikationsschnittstelle 605 kann mit den Ressourcenmanagern 402 beispielsweise über die Kommunikationsverbindungen 405 kommunizieren.

Der zentrale Dienstgütemanager 301 kann in sämtliche Ausführungsformen eingesetzt werden.

## Patentansprüche

1. Verfahren zur Steuerung von Funkzugangsressourcen in einem Kommunikationsnetzwerk (302) zumindest der fünften, 5G, Generation,
das eine Mehrzahl von logisch voneinander separierten Subnetzwerken (305, 305-1, 305-2) in Form von Netzwerk-Slices aufweist, denen jeweils eine vorgegebene Dienstgüteklasse gemäß zumindest einer Dienstgütevereinbarung für Kommunikationsdienste zugeordnet ist,
das einen zentralen Dienstgütemanager (301) aufweist, der die Dienstgüteklassen der Subnetzwerke (305) verwaltet, und unter Nutzung der physikalischen Ressourcen die Dienstgüte für Kommunikationsverbindungen von mobilen Endgeräten zu den Subnetzwerken bereitstellt,
das ferner ein Funkzugangsnetzwerk (303) aufweist mit einer Mehrzahl von Funkzugangsentitäten (401) für Bereitstellung von Funkzugang für mobile Endgeräte (403) zu den Subnetzwerken (305),
wobei jede Funkzugangsentität (401) einen durch den zentralen Dienstgütemanager (301) gesteuerten Ressourcenmanager (402) aufweist, der als Scheduler die Funkzugangsressourcen für einen Funkzugang zu mindestens einem der Subnetzwerke verwaltet und bereitstellt;
das Verfahren die Schritte umfassend:
Übermitteln eines Steuerparameters durch den zentralen Dienstgütemanager (301) an einen Ressourcenmanager (402) einer ersten Funkzugangsentität (401-1), wobei der Steuerparameter die Dienstgüteklasse eines ersten Subnetzwerkes anzeigt, sowie die Funkzugangsressourcen die in der ersten Funkzugangsentität (401-1) für eine Kommunikationsverbindung zur Erfüllung der Dienstgüteklasse des ersten Subnetzwerks (305-1) benötigt werden,
wobei die Funkzugangsressourcen eine oder mehrere der Funkzugangsressourcen Bandbreite, Frequenzspektrum, Zeitressourcen, Anzahl und/oder Zeitlage von Übertragungsrahmen, Anzahl und/oder Zeitlage von Zeitschlitzen, Sendeleistung, Datenrate, Bitfehlerrate, Blockfehlerrate und/oder Latenzzeit definieren;
Übermitteln der Verfügbarkeit der benötigten Funkzugangsressourcen in einer Ressourcennachricht vom Ressourcenmanager (402-1) der ersten Funkzugangsentität (401-1) an den zentralen Dienstgütemanager in Abhängigkeit von dem übermittelten Steuerparameter,
falls die Ressourcennachricht die Verfügbarkeit der Funkzugangsressource anzeigt, Führen der Kommunikationsverbindung vom mobilen Endgerät über das Funkzugangsnetz zum ersten Subnetz über die erste Funkzugangsentität (401-1);
falls die Ressourcennachricht anzeigt, dass nicht genügend Ressourcen für die Einhaltung der geforderten Dienstgüteklasse für das erste Subnetzwerk (305-1) verfügbar sind, Übergeben der Kommunikationsverbindung an eine zweite Funkzugangsentität (401-2) durch den zentralen Dienstgütemanager und/oder den Ressourcenmanager der ersten Funkzugangsentität (401-1).

2. Verfahren nach Anspruch 1, wobei der zentrale Dienstgütemanager (301) die Übergabe der Kommunikationsverbindung des ersten Subnetzwerks (305-1) von der ersten Funkzugangsentität (401-1) zu der zweiten Funkzugangsentität (401-2) gemäß einem Optimierungsparameter initiiert.

3. Verfahren nach Anspruch 2, wobei der Optimierungsparameter zumindest einen der folgenden Optimierungsparameter umfasst: Verfügbarkeit von Funkzugangsressourcen und/oder Datenverarbeitungsressourcen von Funkzugangsentitäten für die jeweilige Kommunikationsverbindung mit der jeweiligen Dienstgüteklasse, Lastausgleich unter den Funkzugangsentitäten, Auswahl einer Funkzugangsentitäten mit den geringsten Funkzugangsressourcen, welche die jeweilige Dienstgüteklasse erfüllen, Dienstgüteanforderungen an einen Datenstrom.

4. Verfahren nach einem der vorstehenden Ansprüche, wobei die Funktionen der Subnetzwerke (305) durch einen Netzwerk-Orchestrierer vorgegeben sind, und wobei der zentrale Dienstgütemanager (301) eine Nachricht an den Netzwerk-Orchestrierer aussendet, falls eine Dienstgütevereinbarung nicht eingehalten werden kann.

5. Verfahren nach einem der vorstehenden Ansprüche, wobei der Steuerparameter zusätzlich eine Dienstgüteklasse eines Datenstroms und/oder eines Benutzers anzeigt.

6. Verfahren nach einem der vorstehenden Ansprüche, wobei der Steuerparameter von dem zentralen Dienstgütemanager (301) zu dem jeweiligen Ressourcenmanager (402) über das Kommunikationsnetzwerk (302), insbesondere über Kontrollkanäle des Kommunikationsnetzwerks (302), übermittelt wird.

7. Verfahren nach einem der vorstehenden Ansprüche, wobei die Funkzugangsentitäten (401) für unterschiedliche Funkzugangstechnologien ausgelegt sind, insbesondere LTE, WLAN, UMTS, GSM, 5G, und Kommunikationstechnologien für Maschine Type Communication (MTC).

8. Verfahren nach einem der vorstehenden Ansprüche, wobei die Subnetzwerke (305) kommunikationstechnisch voneinander isoliert sind.

9. Verfahren nach einem der vorstehenden Ansprüche, wobei jeder Dienstgüteklasse ein Steuerparameter zugeordnet ist, welcher zumindest eine Funkzugangsressource charakterisiert, und wobei der zentrale Dienstgütemanager (301) denjenigen Steuerparameter auswählt, welcher der jeweiligen Dienstgüteklasse zugeordnet ist.

10. Kommunikationssystem (300) zur Steuerung von Funkzugangsressourcen in einem Kommunikationsnetzwerk (302), wobei das Kommunikationsnetzwerk (302) eine Mehrzahl von Subnetzwerken (305) mit einem ersten Subnetzwerk (305-1) und mit einem Subnetzwerk (305-2) aufweist, wobei das Kommunikationsnetzwerk (302) ein Kommunikationssetzwerk zumindest der fünften (5G) Generation ist, wobei die Subnetzwerke (305) Netzwerk-Slices sind, wobei jedem Subnetzwerk (305) zumindest eine vorgegebene Dienstgüteklasse gemäß zumindest einer Dienstgütevereinbarung zugeordnet ist, mit:
einem zentralen Dienstgütemanager (301) zur Verwaltung von Dienstgüteklassen der Subnetzwerke (305);
wobei das Kommunikationsnetzwerk (302) ferner ein Funkzugangsnetzwerk (303) mit einer Mehrzahl von Funkzugangsentitäten (401) für Funkzugang zu den Subnetzwerken (305) aufweist, wobei das Funkzugangsnetzwerk (303) ein Radio Access Network ist, wobei die Funkzugangsentitäten (401) Basisstationen sind, wobei die Funkzugangsentitäten (401) jeweils einen steuerbaren Ressourcenmanager (402) zur Einstellung zumindest einer Funkzugangsressource der Funkzugangsentität (401) aufweisen, wobei die Funkzugangsentitäten (401) die Funkzugangsressourcen für eine Kommunikation zwischen einem mobilen Endgerät und einem Subnetzwerk (305) bereitstellen, wobei die Ressourcenmanager (402) als Scheduler ausgebildet sind, wobei die Ressourcenmanager (402) durch den zentralen Dienstgütemanager (301) steuerbar sind; wobei
der zentrale Dienstgütemanager (301) ausgebildet ist, einen Steuerparameter an den Ressourcenmanager (402) einer ersten Funkzugangsentität (401-1) auszusenden, wobei der Steuerparameter zumindest eine Funkzugangsressource der ersten Funkzugangsentität (401-1) für eine Kommunikationsverbindung des Subnetzwerks (305) über die erste Funkzugangsentität (401-1) mit einer ersten Dienstgüteklasse, welche dem ersten Subnetzwerk (305-1) zugeordnet ist, definiert; und wobei
der Ressourcenmanager (402) der ersten Funkzugangsentität (401-1) ausgebildet ist, gemäß dem übermittelten Steuerparameter die Funkzugangsressource der ersten Funkzugangsentität (401-1) einzustellen,
so dass die Ressourcenmanager (402) und somit die Funkzugangsressource der Funkzugangsentitäten (401) zentral durch den Dienstgütemanager (301) gesteuert werden können,
wobei die erste Funkzugangsentität (401-1) ausgebildet ist, eine Ressourcennachricht an den zentralen Dienstgütemanager (301) zu übermitteln, wobei die Ressourcennachricht die Verfügbarkeit der Funkzugangsressource gemäß dem übermittelten Steuerparameter anzeigt, und wobei die Kommunikationsverbindung über die erste Funkzugangsentität (401-1) geführt wird, falls die Ressourcennachricht die Verfügbarkeit der Funkzugangsressource anzeigt, oder wobei die Kommunikationsverbindung an eine zweite Funkzugangsentität (401-2) durch den zentralen Dienstgütemanager und/oder den Ressourcenmanager der ersten Funkzugangsentität (401-1) übergeben wird, wenn die Ressourcennachricht anzeigt, dass die erste Funkzugangsentität (401-1) nicht genügend Ressourcen für die Einhaltung der geforderten Dienstgüteklasse für das erste Subnetzwerk (305-1) aufweist,
wobei der Steuerparameter zumindest eine der folgenden Funkzugangsressourcen definiert: Bandbreite, Frequenzspektrum, Zeitressourcen, Anzahl und/oder Zeitlage von Übertragungsrahmen, Anzahl und/oder Zeitlage von Zeitschlitzen, Sendeleistung, Datenrate, Bitfehlerrate, Blockfehlerrate, Latenzzeit.

## Claims

1. Method for controlling radio access resources in a communication network (302) at least of the fifth, 5G, generation
having a plurality of subnetworks (305, 305-1, 305-2) in the form of network slices which are logically separated from one another and are each assigned a predefined quality of service class according to at least one quality of service agreement for communication services, having a central quality of service manager (301) which manages the quality of service classes of the subnetworks (305) and provides the quality of service for communication connections from mobile terminals to the subnetworks using the physical resources,
also having a radio access network (303) having a plurality of radio access entities (401) for providing radio access for mobile terminals (403) to the subnetworks (305),
wherein each radio access entity (401) has a resource manager (402) which is controlled by the central quality of service manager (301) and, as a scheduler, manages and provides the radio access resources for radio access to at least one of the subnetworks;
the method comprising the steps of:
transmitting a control parameter to a resource manager (402) of a first radio access entity (401-1) by means of the central quality of service manager (301), wherein the control parameter indicates the quality of service class of a first subnetwork as well as the radio access resources which are required in the first radio access entity (401-1) for a communication connection for complying with the quality of service class of the first subnetwork (305-1),
wherein the radio access resources define one or more of the following radio access resources: bandwidth, frequency spectrum, time resources, number and/or time of transmission frames, number and/or time of time slots, transmission power, data rate, bit error rate, block error rate and/or latency;
transmitting the availability of the required radio access resources in a resource message from the resource manager (402-1) of the first radio access entity (401-1) to the central quality of service manager on the basis of the transmitted control parameter,
if the resource message indicates the availability of the radio access resource, routing the communication connection from the mobile terminal via the radio access network to the first subnetwork via the first radio access entity (401-1);
if the resource message indicates that sufficient resources for complying with the required quality of service class for the first subnetwork (305-1) are not available, transferring the communication connection to a second radio access entity (401-2) by means of the central quality of service manager and/or the resource manager of the first radio access entity (401-1).

2. Method according to Claim 1, wherein the central quality of service manager (301) initiates the transfer of the communication connection of the first subnetwork (305-1) from the first radio access entity (401-1) to the second radio access entity (401-2) according to an optimization parameter.

3. Method according to Claim 2, wherein the optimization parameter comprises at least one of the following optimization parameters: availability of radio access resources and/or data processing resources of radio access entities for the respective communication connection with the respective quality of service class, load balancing among the radio access entities, selection of a radio access entity having the fewest radio access resources which comply with the respective quality of service class, quality of service requirements imposed on a data stream.

4. Method according to one of the preceding claims, wherein the functions of the subnetworks (305) are predefined by a network orchestrator, and wherein the central quality of service manager (301) emits a message to the network orchestrator if a quality of service agreement cannot be complied with.

5. Method according to one of the preceding claims, wherein the control parameter additionally indicates a quality of service class of a data stream and/or of a user.

6. Method according to one of the preceding claims, wherein the control parameter is transmitted from the central quality of service manager (301) to the respective resource manager (402) via the communication network (302), in particular via control channels of the communication network (302).

7. Method according to one of the preceding claims, wherein the radio access entities (401) are designed for different radio access technologies, in particular LTE, WLAN, UMTS, GSM, 5G and communication technologies for Machine Type Communication (MTC).

8. Method according to one of the preceding claims, wherein the subnetworks (305) are isolated from one another in terms of communication.

9. Method according to one of the preceding claims, wherein each quality of service class is assigned a control parameter which characterizes at least one radio access resource, and wherein the central quality of service manager (301) selects that control parameter which is assigned to the respective quality of service class.

10. Communication system (300) for controlling radio access resources in a communication network (302), wherein the communication network (302) has a plurality of subnetworks (305) having a first subnetwork (305-1) and a subnetwork (305-2), wherein the communication network (302) is a communication network at least of the fifth (5G) generation, wherein the subnetworks (305) are network slices, wherein each subnetwork (305) is assigned at least one predefined quality of service class according to at least one quality of service agreement, having:
a central quality of service manager (301) for managing quality of service classes of the subnetworks (305);
wherein the communication network (302) also has a radio access network (303) having a plurality of radio access entities (401) for radio access to the subnetworks (305), wherein the radio access network (303) is a Radio Access Network, wherein the radio access entities (401) are base stations, wherein the radio access entities (401) each have a controllable resource manager (402) for setting at least one radio access resource of the radio access entity (401), wherein the radio access entities (401) provide the radio access resources for communication between a mobile terminal and a subnetwork (305), wherein the resource managers (402) are configured as schedulers, wherein the resource managers (402) can be controlled by the central quality of service manager (301); wherein
the central quality of service manager (301) is configured to emit a control parameter to the resource manager (402) of a first radio access entity (401-1), wherein the control parameter defines at least one radio access resource of the first radio access entity (401-1) for a communication connection of the subnetwork (305) via the first radio access entity (401-1) with a first quality of service class which is assigned to the first subnetwork (305-1); and wherein
the resource manager (402) of the first radio access entity (401-1) is configured to set the radio access resource of the first radio access entity (401-1) according to the transmitted control parameter,
with the result that the resource managers (402) and therefore the radio access resource of the radio access entities (401) can be centrally controlled by the quality of service manager (301),
wherein the first radio access entity (401-1) is configured to transmit a resource message to the central quality of service manager (301), wherein the resource message indicates the availability of the radio access resource according to the transmitted control parameter, and wherein the communication connection is routed via the first radio access entity (401-1) if the resource message indicates the availability of the radio access resource, or wherein the communication connection is transferred to a second radio access entity (401-2) by the central quality of service manager and/or the resource manager of the first radio access entity (401-1) if the resource message indicates that the first radio access entity (401-1) does not have sufficient resources for complying with the required quality of service class for the first subnetwork (305-1),
wherein the control parameter defines at least one of the following radio access resources: bandwidth, frequency spectrum, time resources, number and/or time of transmission frames, number and/or time of time slots, transmission power, data rate, bit error rate, block error rate, latency.

## Revendications

1. Procédé de commande de ressources d'accès radio dans un réseau de communication (302) au moins de cinquième génération, 5G, comprenant une pluralité de sous-réseaux (305, 305-1, 305-2) séparés logiquement les uns des autres sous la forme de tranches de réseau auxquelles est affectée une classe de qualité de service prédéterminée respective conformément à au moins un accord de qualité de service pour services de communication,
comportant un gestionnaire de qualité de service central (301) qui gère les classes de qualité de service des sous-réseaux (305) et fournit aux sous-réseaux la qualité de service pour des liaisons de communication de terminaux mobiles en utilisant les ressources physiques, comportant en outre un réseau d'accès radio (303) comprenant une pluralité d'entités d'accès radio (401) destinées à fournir un accès radio aux sous-réseaux (305) pour des terminaux mobiles (403),
dans lequel chaque entité d'accès radio (401) comprend un gestionnaire de ressources (402) commandé par le gestionnaire de qualité de service central (301) qui, sous la forme d'un programmateur, gère et fournit les ressources d'accès radio pour un accès radio à au moins l'un des sous-réseaux ;
le procédé comprenant les étapes suivantes :
transmission d'un paramètre de commande par le gestionnaire de qualité de service central (301) à un gestionnaire de ressources (402) d'une première entité d'accès radio (401-1),
dans lequel le paramètre de commande indique la classe de qualité de service d'un premier sous-réseau, ainsi que les ressources d'accès radio requises dans la première entité d'accès radio (401-1) pour une liaison de communication afin de respecter la classe de qualité de service du premier sous-réseau (305-1),
dans lequel les ressources d'accès radio définissent une ou plusieurs des ressources d'accès radio suivantes : largeur de bande, spectre de fréquences, ressources temporelles, nombre et/ou cadencement des trames de transmission, nombre et/ou cadencement des créneaux temporels, puissance d'émission, débit de données, taux d'erreur sur les bits, taux d'erreur sur les blocs et/ou temps de latence ;
transmission de la disponibilité des ressources d'accès radio requises dans un message de ressources du gestionnaire de ressources (402-1) de la première entité d'accès radio (401-1) au gestionnaire de qualité de service central en fonction du paramètre de commande transmis,
si le message de ressources indique la disponibilité de la ressource d'accès radio, acheminement de la liaison de communication du terminal mobile par l'intermédiaire du réseau d'accès radio vers le premier sous-réseau par l'intermédiaire de la première entité d'accès radio (401-1) ;
si le message de ressources indique que les ressources disponibles sont insuffisantes pour respecter la classe de qualité de service requise pour le premier sous-réseau (305-1), transfert de la liaison de communication à une seconde entité d'accès radio (401-2) par le gestionnaire de qualité de service central et/ou le gestionnaire de ressources de la première entité d'accès radio (401-1).

2. Procédé selon la revendication 1, dans lequel le gestionnaire de qualité de service central (301) initie le transfert de la liaison de communication du premier sous-réseau (305-1) de la première entité d'accès radio (401-1) à la seconde entité d'accès radio (401-2) conformément à un paramètre d'optimisation.

3. Procédé selon la revendication 2, dans lequel le paramètre d'optimisation comprend au moins l'un des paramètres d'optimisation suivants : disponibilité de ressources d'accès radio et/ou de ressources de traitement de données d'entités d'accès radio pour la liaison de communication respective avec la classe de qualité de service respective, équilibrage de charge entre les entités d'accès radio, sélection d'une entité d'accès radio présentant les ressources d'accès radio les plus faibles qui respectent les exigences de qualité de service respectives d'un flux de données.

4. Procédé selon l'une des revendications précédentes, dans lequel les fonctions des sous-réseaux (305) sont prédéterminées par un orchestrateur de réseau et dans lequel le gestionnaire de qualité de service central (301) envoie un message à l'orchestrateur de réseau si un accord de qualité de service ne peut pas être respecté.

5. Procédé selon l'une des revendications précédentes, dans lequel le paramètre de commande indique en outre une classe de qualité de service d'un flux de données et/ou d'un utilisateur.

6. Procédé selon l'une des revendications précédentes, dans lequel le paramètre de commande est transmis du gestionnaire de qualité de service central (301) au gestionnaire de ressources (402) respectif par l'intermédiaire du réseau de communication (302), en particulier par l'intermédiaire de canaux de contrôle du réseau de communication (302).

7. Procédé selon l'une des revendications précédentes, dans lequel les entités d'accès radio (401) sont conçues pour différentes technologies d'accès radio, en particulier LTE, WLAN, UMTS, GSM, 5G, et pour des technologies de communication pour les Communications de Type Machine (MTC).

8. Procédé selon l'une des revendications précédentes, dans lequel les sous-réseaux (305) sont isolés les uns des autres du point de vue de la technique de communication.

9. Procédé selon l'une des revendications précédentes, dans lequel chaque classe de qualité de service est associée à un paramètre de commande caractérisant au moins une ressource d'accès radio et dans lequel le gestionnaire de qualité de service central (301) sélectionne le paramètre de commande associé à la classe de qualité de service respective.

10. Système de communication (300) destiné à commander des ressources d'accès radio dans un réseau de communication (302),
dans lequel le réseau de communication (302) comprend une pluralité de sous-réseaux (305) comportant un premier sous-réseau (305-1) et un sous-réseau (305-2), dans lequel le réseau de communication (302) est un réseau de communication au moins de cinquième génération (5G), dans lequel les sous-réseaux (305) sont des tranches de réseau, dans lequel à chaque sous-réseau (305) est affectée au moins une classe de qualité de service prédéterminée conformément à au moins un accord de qualité de service, comportant :
un gestionnaire de qualité de service central (301) pour gérer des classes de qualité de service des sous-réseaux (305) ;
dans lequel le réseau de communication (302) comporte en outre un réseau d'accès radio (303) comprenant une pluralité d'entités d'accès radio (401) pour un accès radio aux sous-réseaux (305), dans lequel le réseau d'accès radio (303) est un Radio Access Network, dans lequel les entités d'accès radio (401) sont des stations de base, dans lequel les entités d'accès radio (401) comportent respectivement un gestionnaire de ressources (402) pouvant être commandé pour régler au moins une ressource d'accès radio de l'entité d'accès radio (401), dans lequel les entités d'accès radio (401) fournissent les ressources d'accès radio destinées à une communication entre un terminal mobile et un sous-réseau (305), dans lequel les gestionnaires de ressources (402) sont réalisés sous la forme de programmateurs, dans lequel les gestionnaires de ressources (402) peuvent être commandés par le gestionnaire de qualité de service central (301) ; dans lequel
le gestionnaire de qualité de service central (301) est conçu pour transmettre un paramètre de commande au gestionnaire de ressources (402) d'une première entité d'accès radio (401-1), dans lequel le paramètre de commande définit au moins une ressource d'accès radio de la première entité d'accès radio (401-1) pour une liaison de communication du sous-réseau (305) par l'intermédiaire de la première entité d'accès radio (401-1) avec une première classe de qualité de service qui est associée au premier sous-réseau (305-1) ; et dans lequel
le gestionnaire de ressources (402) de la première entité d'accès radio (401-1) est conçu pour régler la ressource d'accès radio de la première entité d'accès radio (401-1) conformément au paramètre de commande transmis,
de manière à ce que les gestionnaires de ressources (402) et par conséquent la ressource d'accès radio des entités d'accès radio (401) puissent être commandés de manière centralisée par le gestionnaire de qualité de service (301),
dans lequel la première entité d'accès radio (401-1) est conçue pour transmettre un message de ressources au gestionnaire de qualité de service central (301), dans lequel le message de ressources indique la disponibilité de la ressource d'accès radio conformément au paramètre de commande transmis, et dans lequel la liaison de communication est acheminée par l'intermédiaire de la première entité d'accès radio (401-1) si le message de ressources indique la disponibilité de la ressource d'accès radio, ou dans lequel la liaison de communication est transférée à une seconde entité d'accès radio (401-2) par le gestionnaire de qualité de service central et/ou le gestionnaire de ressources de la première entité d'accès radio (401-1) lorsque le message de ressources indique que la première entité d'accès radio (401-1) ne comporte pas suffisamment de ressources pour respecter la classe de qualité de service requise pour le premier sous-réseau (305-1),
dans lequel le paramètre de commande définit au moins l'une des ressources d'accès radio suivantes : largeur de bande, spectre de fréquences, ressources temporelles, nombre et/ou cadencement des trames de transmission, nombre et/ou cadencement des créneaux temporels, puissance d'émission, débit de données, taux d'erreur sur les bits, taux d'erreur sur les blocs, temps de latence.
